# EUROPEAN PATENT SPECIFICATION

(11) **EP 3 598 592 B1**
(45) Date of publication and mention of the grant of the patent: **22.06.2022**
(21) Application number: 19186201.0
(22) Date of filing: 15.07.2019
(51) Int. Cl.: H02G 1/08

(54) **AN INSERTING SYSTEM OF AT LEAST ONE ELECTRICAL CABLE INTERNALLY OF A PROTECTIVE TUBE**
EINFÜHRSYSTEM MIT WENIGSTENS EINEM ELEKTRISCHEN KABEL IN EINEM SCHUTZROHR
SYSTÈME D'INSERTION D'AU MOINS UN CÂBLE ÉLECTRIQUE INTERNE D'UN TUBE DE PROTECTION

(30) Priority: 16.07.2018 IT 201800007217
(43) Date of publication of application: 22.01.2020
(73) Proprietor: Coli, Daniele, 42017 Novellara (RE) (IT)
(72) Inventor: Coli, Daniele, 42017 Novellara (RE) (IT)
(74) Representative: Dall'Olio, Christian

(56) References cited:
- EP-A1- 0 467 463
- CN-U- 201 629 520
- US-A- 5 855 062
- Gianluigi Severi: "Guida alla scelta dei tubi protettivi per cavi", , 11 September 2011 (2011-09-11), XP055566805, Retrieved from the Internet: URL:https://www.voltimum.it/sites/www.volt imum.it/files/it/attachments/pdi/f/1106gui da_tubi_protettivi.pdf [retrieved on 2019-03-11]

## Description

The present invention relates to the inserting system of one or more electrical cables internally of a protective tube.

It is known, for civil or industrial installations, to arrange one or more electrical cables, rigid or flexible, inside a protective tube, for example corrugated, to ensure protection thereof once embedded in walls or terrains, or to guarantee the protection thereof when exposed to external atmospheric conditions.

To date, in order to have a plurality of electrical cables inside a protective tube, an extrusion machine is known, comprising: an extrusion unit for extruding the PVC plastic material, so as to produce the protective tube in plastic; a plurality of unwinding units which unwind a plurality of reels of electrical cables; a winding unit which winds the protective tube with the plurality of electrical cables inside them onto reels. The electrical cables, which are progressively unwound from the unwinding units, pass through the extrusion unit, which realises the protective tube around them.

The extrusion unit comprises cooling means which blow air directly into the protective tube, as soon as it is formed, to cool it following the extrusion process. To enable optimal cooling of the protective tube an adequate free space must remain internally of the protective tube.

A standard protective tube has an external diameter of 16 mm and an internal diameter of 12.5 mm: for the above-mentioned reasons it can at most contain three electrical cables with 2.5 mm diameters.

The drawback of this extrusion machine is that in a standard protective tube a fifth electrical cable cannot be included.

In general, it is desirable to leave less free space internally of the protective tube in order to minimise the radial dimensions of the protective tube.

Further, the above-described extrusion machine has high production costs and must preferably work continuously. Special requests by the customers for limited lengths (up to a few hundred metres) cannot however be satisfied, if not at high cost.

In the light of the foregoing, the aim of the present invention consists in obviating the above drawbacks.

The above-mentioned aim is attained by inserting system of at least one electrical cable internally of a protective tube, according to claim 1.

It is advantageously possible to arrange, internally of a protective tube, a greater number of electrical cables, as it is not necessary to leave a free space for injecting air internally of the protective tube: the protective tube, in fact, is made separately and therefore does not need to be cooled at the moment when a plurality of electrical cables is inserted internally thereof.

It is advantageously possible to manufacture limited lengths, even of a few hundred metres, at lower costs that those involved with the extrusion machine of the prior art.

Specific embodiments of the invention will be described in the following part of the present description, according to what is set out in the claims and with the aid of the accompanying tables of drawings, in which:
- figures 1-4 are schematic views illustrating different operating steps of a method for inserting at least one electrical cable internally of a protective tube, not object of the present invention;
- figure 5 is a schematic view illustrating an inserting system of at least one electrical cable internally of a protective tube, also forming part of the present invention, according to a first embodiment;
- figures 6-10 are views of detail H in steps of an operating cycle of the inserting system of at least one electrical cable internally of a protective tube of figure 5;
- figure 11 is a schematic view illustrating an inserting system of at least one electrical cable internally of a protective tube,
- figures 12-16 are views of detail K in steps of an operating cycle of the inserting system of at least one electrical cable internally of a protective tube of figure 11;
- figures 17 and 18 are lateral views of the inserting system of at least one electrical cable internally of a protective tube of figure 11;
- figure 19 is a view in larger scale of vertical section XX-XX of figure 17;
- figures 20-22 and 24-25 are larger-scale views of details J, V, W, S and T of figures 17 and 18, in which some parts have been removed better to evidence others;
- figure 23 is a further view in larger scale of detail W of figure 17, in which further parts have been removed to better evidence others.

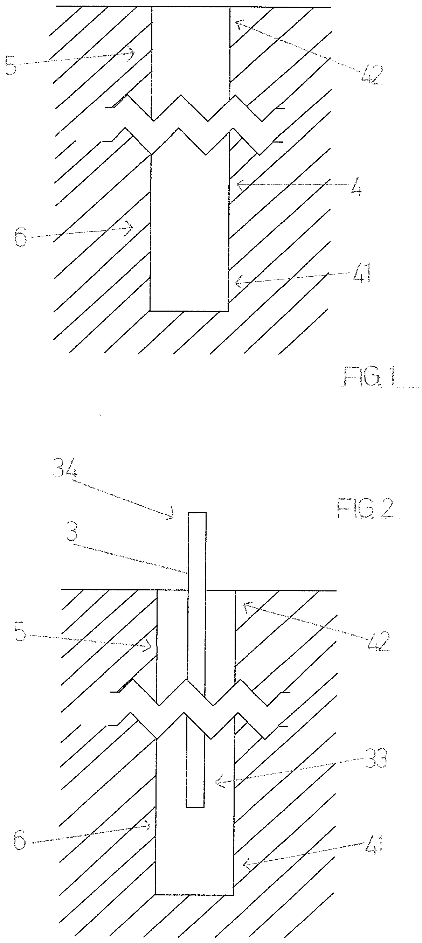

In the following reference is made to figures 1-4.

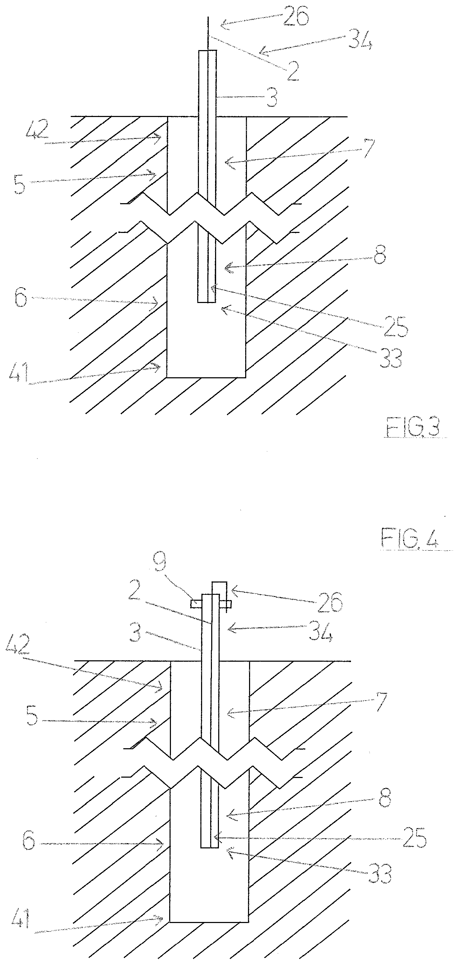

A method, not covered by the claims, for inserting at least one electrical cable (2) internally of a protective tube (3), object of the present invention, comprises steps of: arranging a channel (4) in such a way that a relative first end (41) thereof is at a lower height than a relative second end (42) thereof, which is opposite the first end (41) (see figure 1); introducing at least one protective tube (3) internally of the channel (4) from the second end (42) of the channel (4), and inserting the protective tube (3) internally of the channel (4) for at least one first portion (5) of the channel (4), the protective tube (3) including a third end (33) and being introduced and inserted internally of the channel (4) from the third end (33) thereof (see figure 2). The arrangement of the channel (4) is chosen in such a way that once the protective tube (3) has been inserted for at least the first portion (5) of the channel (4), the force of gravity acting on the protective tube (3) is sufficient in itself to insert the protective tube (3) internally of the channel (4). Further, the method comprises steps of: enabling the insertion of the protective tube (3) internally of the channel (4) by force of gravity for a second portion (6) of channel (4) that is successive to the first portion (5) of the channel (4); if, following the insertion of the protective tube (3) internally of the channel (4), the protective tube (3) protrudes from the second end (42) of the channel (4) by more than a first length, cutting the protective tube (3) in proximity of or at the second end (42) of the channel (4); the protective tube (3) comprising a fourth end (34) which is opposite the third end (33) and which is arranged at a greater height with respect to the third end (33) (see figure 2). After the protective tube (3) has been inserted into the channel (4), the method includes introducing at least one electrical cable (2) internally of the protective tube (3) from the fourth end (34) of the protective tube (3), and inserting the at least one electrical cable (2) internally of the protective tube (3) for at least one third portion (7) of the protective tube (3), the at least one electrical cable (2) comprising a fifth end (25) and being introduced and inserted internally of the protective tube (3) from the relative fifth end (25) (see figure 3). The arrangement of the channel (4) and of the protective tube (3) internally of the channel (4) is chosen in such a way that once the at least one electrical cable (2) has been inserted for at least the third portion (7) of the protective tube (3) the force of gravity acting on the at least one electrical cable (2) is sufficient for inserting the at least one electrical cable (2) internally of the protective tube (3). Lastly, the method includes enabling the at least one electrical cable (2) to be inserted internally of the protective tube (3) by force of gravity for a fourth portion (8) of the protective tube (3) which is successive to the third portion (7) of the protective tube (3); if, after inserting the at least one electrical cable (2) internally of the protective tube (3), the at least one electrical cable (2) protrudes from the fourth end (34) of the protective tube (3) by greater than a second length, cutting off the at least one electrical cable (2) in proximity of or at the fourth end (34) of the protective tube (3); the at least one electrical cable (2) comprising a sixth end (26) which is opposite the fifth end (25) and which is arranged at a greater height than the fifth end (25) (see figure 3).

The channel (4) is preferably arranged vertically deep below the ground surface. Alternatively, the channel (4) can be arranged inclined with respect to a vertical direction. By way of example, the channel (4) can be arranged vertically by a length of 100 metres deep below the ground surface.

The protective tube (3) can be inserted for only a part of the channel (4). For example, if the channel (4) extends for a length of 100 metres, the protective tube (3) can be inserted only for a length of 80 metres.

The protective tube (3) can be made of a plastic material.

The protective tube (3) preferably has a flexibility that is such as to be wound on a reel support to form a reel.

The protective tube (3) can be a corrugated flexible tube.

According to the method of the unclaimed example of Fig. 1 - 4, to insert the protective tube (3) internally of the channel (4) it is sufficient to introduce the protective tube (3) internally of the channel (4) and inserting the protective tube (3) internally of the channel (4) up to when the force of gravity alone acting on the protective tube (3) is sufficient in itself to insert the protective tube (3) internally of the channel (4).

In the same way, to introduce the at least one electrical cable (2) internally of the protective tube (3) it is sufficient to introduce the at least one electrical cable (2) into the protective tube (3) and insert the at least one electrical cable (2) in the protective tube (3) the force of gravity acting on the at least one electrical cable (2) is sufficient for inserting the at least one electrical cable (2) internally of the protective tube (3).

Exploiting only the force of gravity to insert the protective tube (3) into the channel (4) and the at least one electrical cable (2) into the protective tube (3) advantageously makes the carrying out of the present method very simple.

The protective tube (3) is preferably cut so that it protrudes from the second end (42) of the channel (4) by a length that is shorter than the first length.

The first length is such as to enable the protective tube (3) to be cut.

The first length can be 50 cm.

Alternatively the protective tube (3) can be cut so as not to protrude from the second end (42) of the channel (4).

The length of the first portion (5) of the channel (4) depends on the arrangement of the protective tube (3) (for example vertical or inclined), on the specific weight of the protective tube (3) and on the friction between the protective tube (3) and the channel (4) during the inserting of the protective tube (3) internally of the channel (4).

The at least one electrical cable (2) is preferably inserted along the whole length of the protective tube (3). If not, it is sufficient to cut the portion of the protective tube (3), starting from the third end (33) of the protective tube (3), which does not contain the at least one electrical cable (2).

The at least one electrical cable (2) is preferably cut so that it protrudes from the fourth end (34) of the protective tube (3) by a length that is shorter than the second length.

The second length is such as to enable the at least one electrical cable (2) to be cut.

The second length can be 50 cm.

Alternatively, the at least one electrical cable (2) can be cut so as not to protrude from the fourth end (34) of the protective tube (3).

The length of the third portion (7) of the protective tube (3) depends on the arrangement of the at least one electrical cable (2), on the specific weight of the at least one electrical cable (2) and on the friction between the protective tube (2) and the channel (3) during the inserting of the at least one electrical cable (2) internally of the protective tube (3).

The length of the third portion (7) of the protective tube (3) and of the fourth portion (8) of the protective tube (3) is preferably overall shorter than the length of the channel (4). In other words, there is no contact between the third end (33) of the protective tube (3) and the first end (41) of the channel (4).

The method preferably comprises the following steps: selecting the protective tube (3) so as to be of a sufficient length to protrude from the second end (42) of the channel (4); if, following the insertion of the protective tube (3) internally of the channel (4), the protective tube (3) protrudes from the second end (42) of the channel (4) by longer than the first length, cutting the protective tube (3) so that it protrudes from the second end (42) of the channel (4) by a length that is shorter than the first length; blocking the portion of the protective tube (3) which protrudes from the second end (42) of the channel (4) at least during the inserting of the at least one electrical cable (2) internally of the protective tube (3).

Owing to the blocking the portion of the protective tube (3) which protrudes from the second end (42) of the channel (4), it is advantageously simpler to insert the at least one electrical cable (2) internally of the protective tube (3).

The blocking of the portion of the protective tube (3) that projects from the second end (42) of the channel (4) also prevents the protective tube (3) from falling internally of the channel (4).

If the protective tube (3) is allowed to insert internally of the channel (4) up to a depth which is smaller than the depth of the channel (4), the protective tube (3) is maintained advantageously in tension by effect of the force of gravity, which facilitates the subsequent inserting of the at least one electrical cable (2).

The method preferably also comprises the following steps: selecting the at least one electrical cable (2) of a sufficient length so as to protrude from the fourth end (34) of the protective tube (3); if, after introducing the at least one electrical cable (2) internally of the protective tube (3), the at least one electrical cable (2) protrudes from the fourth end (34) of the protective tube (3) by greater than a second length, cutting the at least one electrical cable (2) so that it protrudes from the fourth end (34) of the protective tube (3) by a length that is shorter than the second length; the method also includes anchoring the portion of the at least one electrical cable (2) which protrudes from the fourth end (34) of the protective tube (3) to the portion of the protective tube (3) which protrudes from the second end (42) of the channel (4) (see figure 4).

In this way, the at least one electrical cable (2) can be prevented from sliding inside the protective tube (3) and in particular the sixth end (26) of the at least one electrical cable (2) can finish internally of the protective tube (3) by effect of the force of gravity. The sixth end (26) of the at least one electrical cable (2) preferably protrudes from the fourth end (34) of the protective tube (3) and is anchored to the fourth end (34) of the protective tube (3). For example, a knot could be tied on the at least one electrical cable (2) at the relative sixth end (26), so that the knot, due to its size, would not be able to insert in the protective tube (3). Alternatively a strap (9) could be applied that binds the sixth end (26) of the at least one electrical cable (2) to the fourth end (34) of the protective tube (3) (see figure 4).

As another alternative, a crimper could be used to crimp the at least one electrical cable (2) at the relative sixth end (26) to the protective tube (3) at the fourth end (34).

Further, the method can comprise a step of unwinding a reel of protective tube (3) in synchrony with the inserting of the protective tube (3) inside the channel (4) and unwinding at least one reel of electrical cable (2) in synchrony with the inserting of the at least one electrical cable (2) internally of the protective tube (3).

In a case where the protective tube (3) is wound on a reel support, the force required to insert the protective tube (3) internally of the channel (4) is substantially identical to the force required to progressively unwind the protective tube (3) from the reel support. The friction forces can be ignored.

In a case where the at least one electrical cable (2) is wound on a reel support, the force required to insert the at least one electrical cable (2) inside the protective tube (3) is substantially equal to the force required to progressively unwind the at least one electrical cable (2) from the reel support. The friction forces can be ignored.

The method can comprise a step of winding the protective tube (3) and the at least one electrical cable (2) in a reel once the at least one electrical cable (2) has been inserted internally of the protective tube (3).

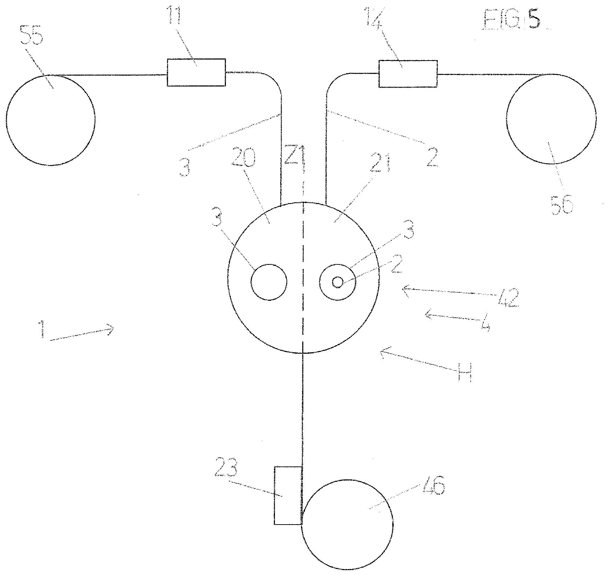

In the following reference is made to figures 5-25. Similar or identical characteristics to the ones described in the foregoing will be denoted using the same numerical references.

An inserting system (1) of at least one electrical cable (2) internally of a protective tube (3), comprises: a channel (4) arranged in such a way that a relative first end (41) thereof is at a lower height than a relative second end (42) thereof, which is opposite the first end (41); first motor means (10) arranged and configured so as to introduce a protective tube (3) internally of the channel (4) from the second end (42) of the channel (4) and inserting the protective tube (3) internally of the channel (4) for at least a

first portion (5) of the channel (4); a first guide (11) which is interposed between the first motor means (10) and the second end (42) of the channel (4), for guiding the protective tube (3) internally of the channel (4) (see figures 1-4, 17 and 19).

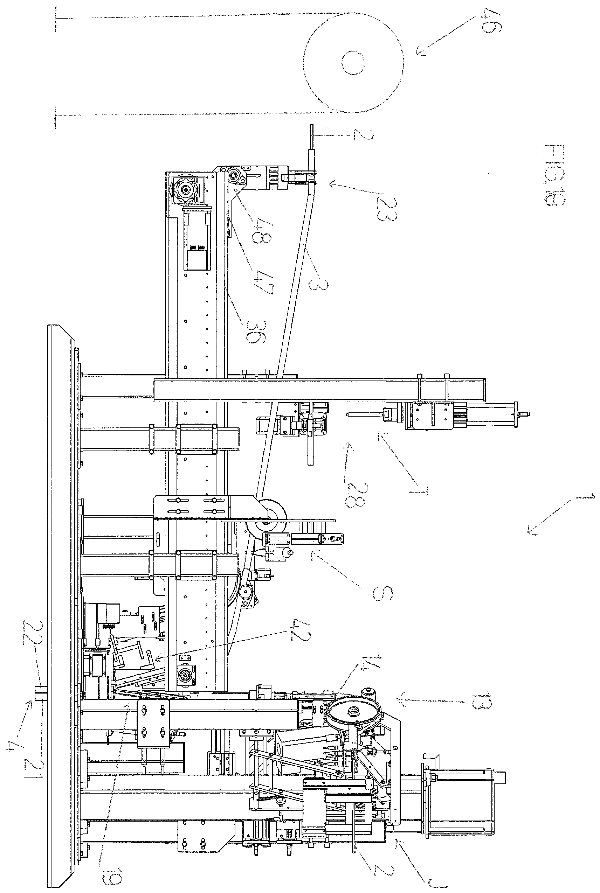

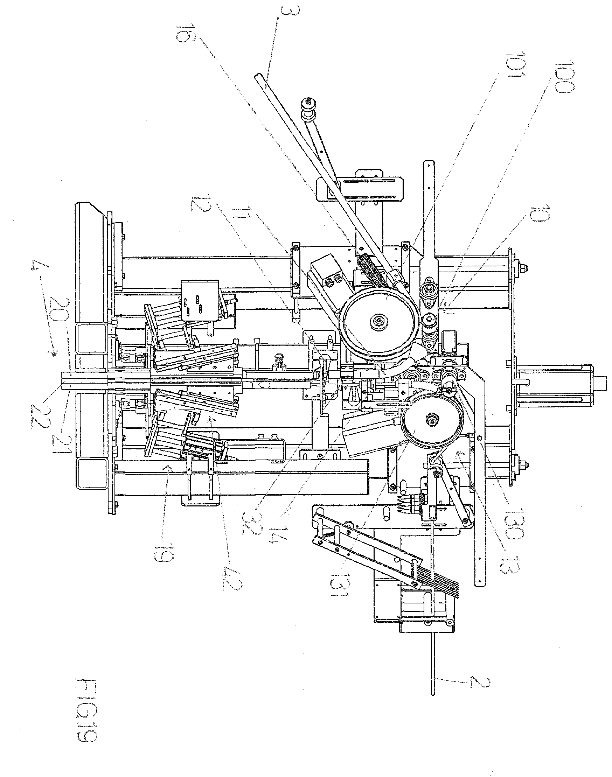

In turn the protective tube (3) comprises a third end (33) and is introduced and inserted internally of the channel (4) from the third end (33) thereof. The arrangement of the channel (4) is chosen in such a way that once the protective tube (3) has been inserted for at least the first portion (5) of the channel (4), the force of gravity acting on the protective tube (3) is sufficient in itself to insert the protective tube (3) internally of the channel (4). Further, the inserting system (1) of at least one electrical cable (2) internally of a protective tube (3) comprises: first cutting means (12) which are arranged so as to cut the protective tube (3) in proximity of or at the second end (42) of the channel (4) (see figures 1-4, 17, 19 and 21); the protective tube (3) comprising a fourth end (34) which is opposite the third end (33) and which is arranged at a greater height with respect to the third end (33); second motor means (13) arranged and configured to introduce at least one electrical cable (2) internally of the protective tube (3) from the fourth end (34) of the protective tube (3) and for inserting the at least one electrical cable (2) internally of the protective tube (3) for at least a third portion (7) of the channel (4) (see figures 1-4, 18, 19 and 20); a second guide (14) which is interposed between the second motor means (13) and the second end (42) of the channel (4), for guiding the at least one electrical cable (2) internally of the protective tube (3) (see figures 18 and 19). The arrangement of the channel (4) and of the protective tube (3) internally of the channel (4) is chosen in such a way that once the at least one electrical cable (2) has been inserted for at least the third portion (7) of the protective tube (3) the force of gravity acting on the at least one electrical cable (2) is sufficient for inserting the at least one electrical cable (2) internally of the protective tube (3). Further, the inserting system (1) of at least one electrical cable (2) internally of a protective tube (3) comprises second cutting means (15) which are arranged so as to cut the at least one electrical cable (2) in proximity of or at the fourth end (34) of the protective tube (3) (see figures 1-4, 21 and 25); the at least one electrical cable (2) comprises a sixth end (26) which is opposite the fifth end (25) and which is arranged at a greater height than the fifth end (25) (see figures 1-4 and figures 17-19; in the latter the depth of the channel (4) has been cut away for reasons of graphic representation).

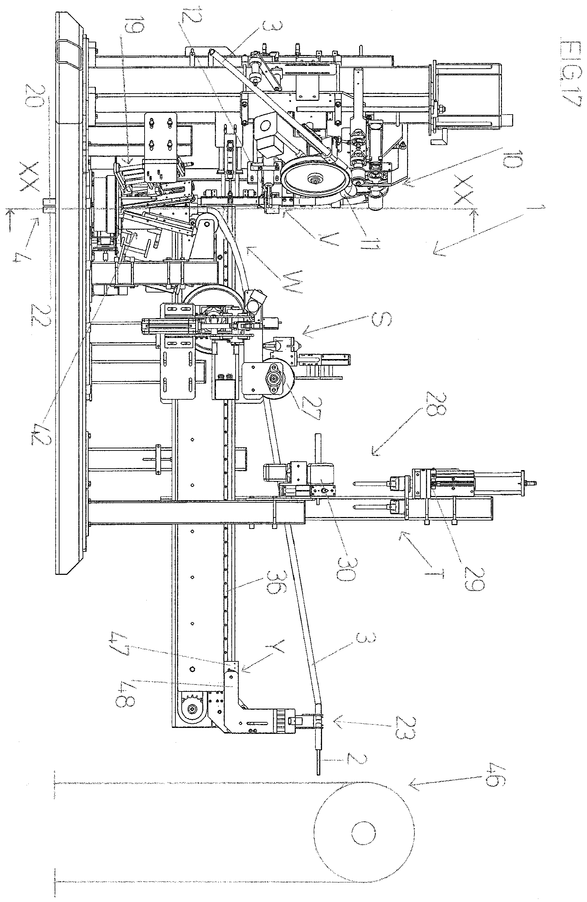

The protective tube (3) preferably protrudes from the second end (42) of the channel (4) and the inserting system (1) of at least one electrical cable (2) internally of a protective tube (3) can comprise blocking means (19) which are arranged so as to block the portion of the protective tube (3) which protrudes from the second end (42) of the channel (4) (see figures 17, 18, 19, 21, 22 and 23).

If the protective tube (3) is inserted internally of the channel (4) up to a depth that is smaller than the depth of the channel (4), the blocking means (19) advantageously ensure that the protective tube (3) is maintained tense by effect of the force of gravity.

The channel (4) preferably comprises a first volume (20) which extends along the length of the channel (4) and a second volume (21), adjacent to the first volume (20), which also extends along the length of the channel (4). For example, the channel (4) can be divided into at least the first volume (20) and the second volume (21); this division can be carried out using a first imaginary plane (Z1) which passes through a diameter of the channel (4) and on which the channel (4) axis lies (see figures 5 and 6-10).

Further, the first motor means (10) and the first guide (11) are arranged in such a way that the protective tube (3) is inserted internally of the first volume (20) of the channel (4) and the second motor means (13) and the second guide (14) are arranged in such a way that the at least one electrical cable (2) is inserted internally of the protective tube (3) when the protective tube (3) is arranged internally of the second volume (21) of the channel (4); the blocking means (19) are mobile in order to move the protective tube (3) from the first volume (20) of the channel (4) to the second volume (21) of the channel (4) (see figures 5, 19, 21-23).

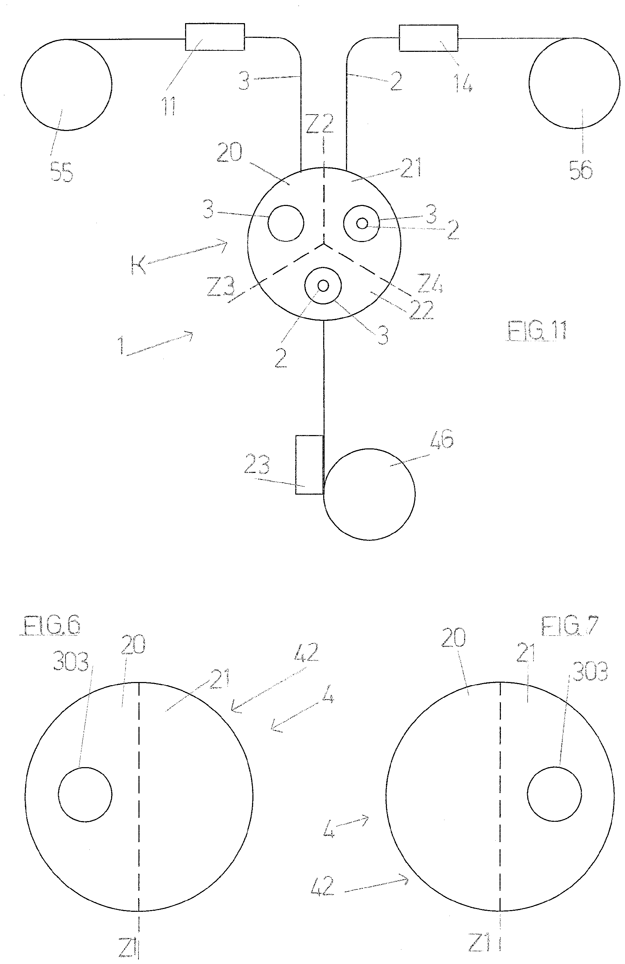

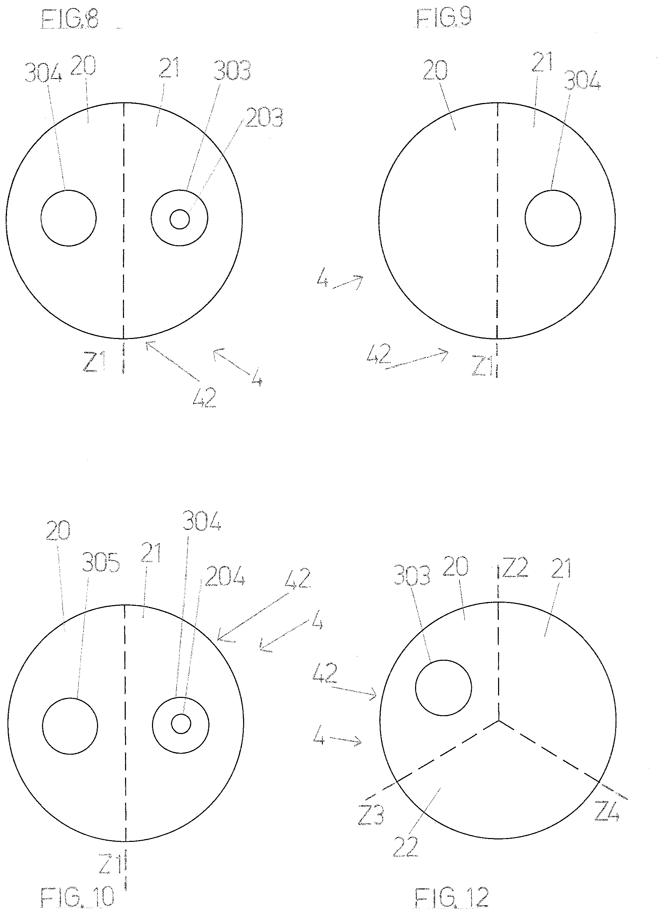

The following is a description of the steps of an operating cycle of the inserting system (1) of at least one electrical cable (2) internally of a protective tube (3), in a case where the channel (4) comprises only the first volume (20) and the second volume (21), see figures 6-10. Once the third protective tube (303) has been inserted in the first volume (20) of the channel (4) (figure 6), the blocking means (19) can block the portion of the third protective tube (303) which projects from the channel (4) and move the portion into the second volume (21) of the channel (4) (figure 7); subsequently, at least one first electrical cable (203) is inserted in the first protective tube (303) arranged in the second volume (21) of the channel (4) (figure 8). At the same time as the inserting action of the at least one first electrical cable (203) internally of the first protective tube (303), a second protective tube (304) can be inserted in the first volume (20) of the channel (4) (figure 8); when the at least one first electrical cable (203) is fully inserted in the first protective tube (303) arranged in the second volume (21) of the channel (4), the first protective tube (303) with the at least one first electrical cable (203) can be removed from the channel (4) (possible wound on a reel) and then the second protective tube (304) can be moved to the second volume (21) of the channel (4) (figure 9). At this point the cycle is repeated: at the same time as the inserting action of the at least one second electrical cable (204) internally of the second protective tube (304) arranged in the second volume (21) of the channel (4), a third protective tube (305) can be inserted in the first volume (20) of the channel (4) (figure 10), and so on. In this way, and advantageously, it is possible to increase the productivity of the inserting system (1) of at least one electrical cable (2) internally of a protective tube (3). As the channel (4) only comprises the first volume (20) and the second volume (21), as already specified in the foregoing, then before moving the second protective tube (304) from the first volume (20) to the second volume (21) (figures 8, 9) and inserting internally thereof the at least one second electrical cable (204), it will be necessary to await the removal of the first protective tube (303) with, internally thereof, the at least one first electrical cable (203) from the second volume (21) of the channel (4); this removal can consist in winding the first protective tube (303) with internally thereof the at least one first electrical cable (203) on a reel support. This can require a certain waiting time.

The channel (4) preferably further comprises a third volume (22) which extends along the length of the channel (4) and which is adjacent to the second volume (21) of the channel (4); the blocking means (19) are mobile so as to move the protective tube (3) with the at least one electrical cable (2) internal thereof from the second volume (21) of the channel (4) to the third volume (22) of the channel (4) (see figures 11, 19, 21-23).

The channel (4) can preferably be divided into at least the first volume (20) and the second volume (21) and the third volume (22); this division can be made by means of a second imaginary plane (Z2), a third imaginary plane (Z3) and a fourth imaginary plane (Z4) which have in common the channel (4) axis and which are equidistanced angularly to one another by angles of 120°.

The following is a description of the steps of an operating cycle of the inserting system (1) of at least one electrical cable (2) internally of a protective tube (3), in a case where the channel (4) comprises the first volume (20), the second volume (21) and the third volume (22), with reference to figures 12-16.

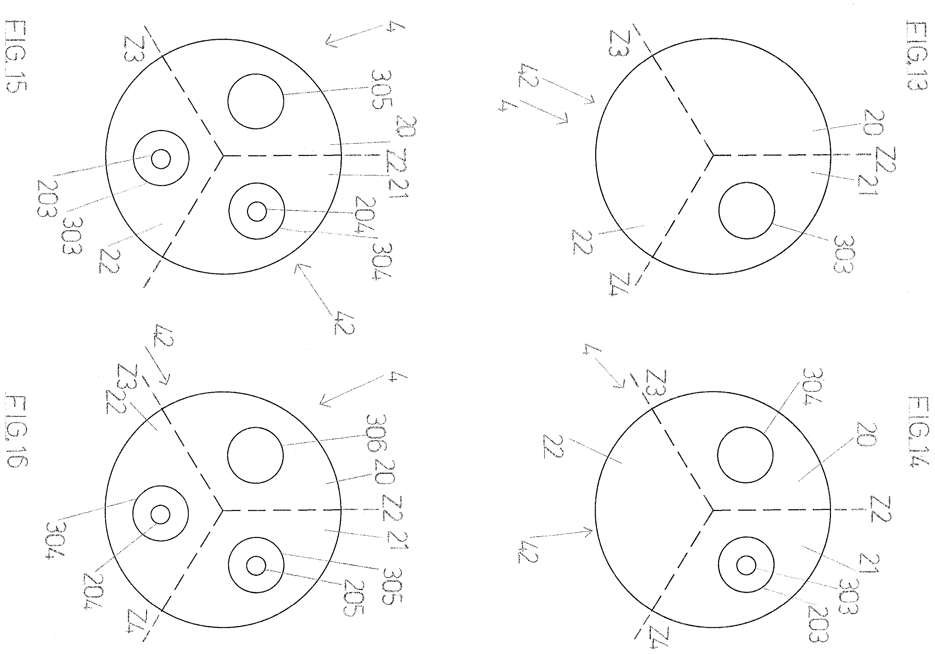

Once the third protective tube (303) has been inserted in the first volume (20) of the channel (4) (figure 12), the blocking means (19) can block the portion of the first protective tube (303) which projects from the channel (4) and move the portion into the second volume (21) of the channel (4) (figure 13); subsequently, the at least one first electrical cable (203) is inserted in the first protective tube (303) arranged in the second volume (21) of the channel (4) (figure 14). At the same time as the inserting action of the at least one first electrical cable (203) internally of the first protective tube (303), a second protective tube (304) can be inserted in the first volume (20) of the channel (4). Once the insertion of the at least one third electrical cable (203) internally of the third protective tube (303) arranged in the second volume (21) of the channel (4) has been concluded, the following operations can be carried out (figure 15): the first protective tube (303) with the at least one first electrical cable (203) is moved in the third volume (22) of the channel (4) by means of the blocking means (19) and can then be wound on a reel; the second protective tube (304) is moved from the first volume (20) of the channel (4) to the second volume (21) of the channel (4), and the at least one second electrical cable (204) is inserted internally thereof; and the third protective tube (305) is inserted in the first volume (20) of the channel (4). At this point the cycle is repeated (figure 16): the second protective tube (304) with the at least one second electrical cable (204) is moved in the third volume (22) of the channel (4) by means of the blocking means (19) and can then be wound on a reel; the third protective tube (305) is moved from the first volume (20) of the channel (4) to the second volume (21) of the channel (4) and at least one third electrical cable (205) is inserted internally thereof; and a fourth protective tube (306) is inserted in the first volume (20) of the channel (4).

The channel (4), comprising the first volume (20), the second volume (21) and the third volume (22), enables avoidance of waiting times linked to the removal of the first protective tube (303) with, internally thereof, the at least one first electrical cable (203) from the second volume (21), since as soon as the at least one first electrical cable (203) has been inserted in the first protective tube (303) (figure 14), the first protective tube (303) with, internally thereof, the at least one first electrical cable (203) can immediately be moved by the blocking means (19) in the third volume (22) of the channel (4) (figure 15), freeing the second volume (21) of the channel (4): the blocking means (19) can thus move the second protective tube (304) in the second volume (21) of the channel (4) and the at least one second electrical cable (204) can be inserted in the second electrical cable (304), with no waiting time.

Advantageously, since the first motor means (10) and the first guide (11), on one side, the second motor means (13) and the second guide (14), on another side, and a reel support or winding device, on yet another side, are located internally of an industrial facility in different positions and occupy certain spaces, exploiting the three volumes (20, 21, 22) of the channel (4) ensures optimisation of the spaces of the warehouse (see figure 11).

If the channel (4) is vertical and if the protective tube (3) extends internally of the channel (4) to a depth that is smaller than that of the channel (4), then the protective tube (3) extends internally of the channel (4), remaining under tension, and the first volume (20) of the channel (4), the second volume (21) of the channel (4) and the third volume (22) of the channel (4) are automatically defined.

Figures 17, 18 and 19 illustrate the inserting of the fourth protective tube (304) in the first volume (20) of the channel (4) and the contemporary inserting of the at least one first electrical cable (203) internally of the first protective tube (303) already arranged inside the second volume (21) of the channel (4) (alike to the step of the operating cycle of figure 8).

Further, figures 17, 18 and 19 also illustrate the inserting of the third protective tube (305) in the first volume (20) of the channel (4) and the contemporary inserting of the at least one second electrical cable (204) internally of the second protective tube (304) already arranged inside the second volume (21) of the channel (4) and the third volume (22) of the channel (4) occupied by the first protective tube (303) with the at least one first electrical cable (203) internal thereof, which awaits being taken and wound in reels, for example (alike to the step of the operating cycle of figure 15).

The inserting system (1) of at least one electrical cable (2) internal of a protective tube (3) preferably comprises a winding device (46) for winding the protective tube (3) in a reel with the at least one electrical cable (2) internal thereof in a reel (see figures 5, 11, 17 and 18); gripping means (23) which are arranged so as to grip the protective tube (3) with the at least one electrical cable internally thereof from the third volume (22) of the channel (4) (see figures 17 and 18) and to take the protective tube (3) to the input of the winding device (46).

The at least one electrical cable (2) preferably protrudes from the fourth end (34) of the protective tube (3), and the inserting system (1) of at least one electrical cable (2) internally of the protective tube (3) comprises anchoring means (28) for anchoring the portion of the at least one electrical cable (2) which protrudes from the fourth end (34) of the protective tube (3) to the portion of the protective tube (3) which protrudes from the second end (42) of the channel (4) (see figures 17-18 and 25).

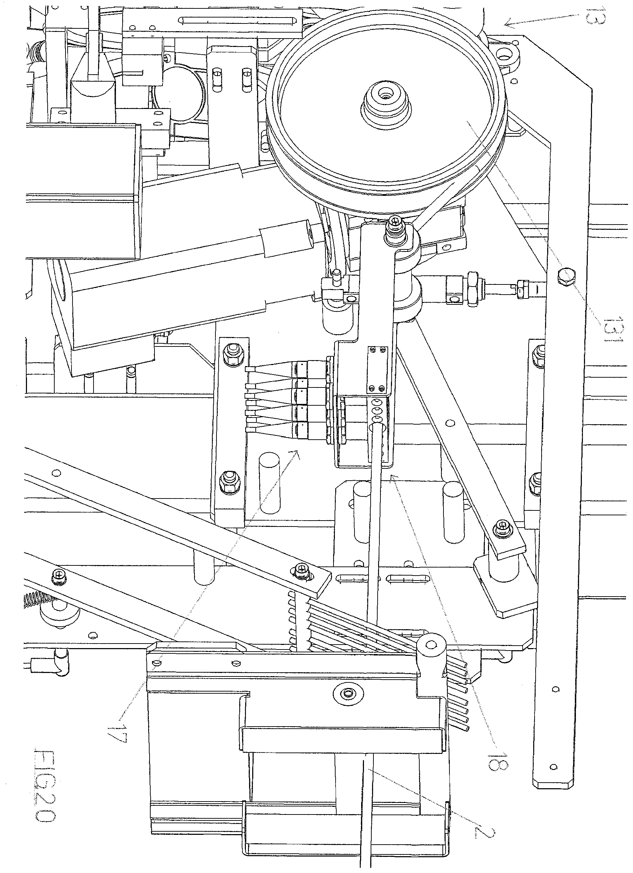

The first motor means (10) can comprise a first drive roller (100) and a first idle roller (101) between which the protective tube (3) is interposed (see figure 19). The second motor means (13) can comprise a second drive roller (130) and a second idle roller (131) between which the at least one electrical cable (2) is interposed (see figures 19 and 20).

The inserting system (1) of at least one electrical cable (2) internal of a protective tube (3) can comprise first proximity sensors (16) which are arranged upstream of the first motor means (10) in order to detect the effective presence of the protective tube (3) in infeed to the first motor means (10) (see figure 19). In the same way, the inserting system (1) of at least one electrical cable (2) internally of a protective tube (3) can comprise second proximity sensors (17) which are arranged upstream of the second motor means (13) in order to detect the effective presence of the at least one electrical cable (2) in input to the second motor means (13) (see figure 20).

The second proximity sensors (17) can be, for example, capacitive proximity sensors.

In a case where the first proximity sensors (16) and/or the second proximity sensors (17) detect the absence, respectively, of the protective tube (3) and/or of the at least one electrical cable (2), the inserting system (1) of at least one electrical cable (2) internal of a protective tube (3) can assume a non-operating condition in which the first motor means (10) and the second motor means (13) are not activated.

The second motor means (13) can receive in inlet for example up to 7 electrical cables.

With particular reference to figure 20, the inserting system (1) of at least one electrical cable (2) internally of a protective tube (3) can comprise a third guide (18) comprising, in turn, for example up to 7 through-holes at which the second proximity sensors (17) are arranged. The third guide (18) is arranged upstream of the second motor means (13). The 7 through-holes can be crossed respectively by 7 electrical cables in such a way that the cables are guided towards the second motor means (13).

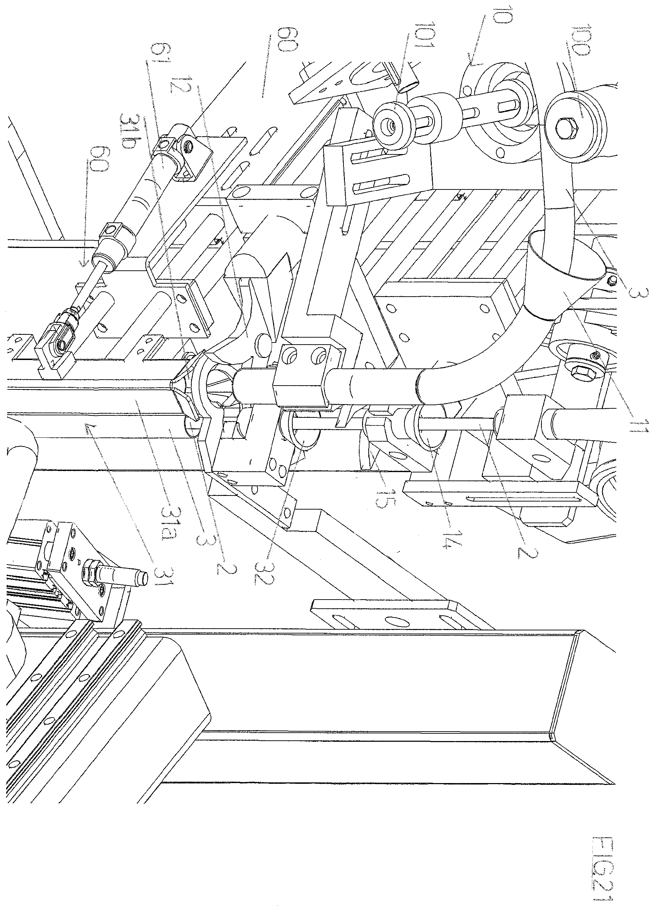

The first cutting means (12) are preferably arranged at or in proximity of the second end (42) of the channel (4) (see figure 21).

The first cutting means (12) can cut the protective tube (3) if, following the insertion of the protective tube (3) internally of the channel (4), the protective tube (3) protrudes from the second end (42) of the channel (4) by longer than the first length.

Further, the inserting system (1) of at least one electrical cable (2) internally of a protective tube (3) can comprise a fourth guide (31) provided with a first L-shaped element (31a) and a second L-shaped element (31b), facing one another, to guide the protective tube (3) inside the channel (4) (see figure 21). The fourth guide (31) is interposed between the first guide (11) and the second end (42) of the channel (4).

The first L-shaped element (31a) and the second L-shaped element (31b) are movable to near one another, up to overall forming a sort of square-profiled tubular element which guides the protective tube (3) (figure 21), or to distance from one another, thus disengaging the protective tube (3) (this configuration is not illustrated).

The inserting system (1) of at least one electrical cable (2) internally of a protective tube (3) can comprise a first actuator cylinder (60) and a second actuator cylinder (61). The first actuator cylinder (60) is solidly constrained to the frame and has the relative piston rod connected to the second L-shaped element (31b); the second actuator cylinder (61) is borne by the piston solidly constrained to the first actuator cylinder (60) and has the relative piston rod connected to the first L-shaped element (31a) (see figure 21). The piston rod of the first actuator cylinder (60) thus moves both the first L-shaped element (31a) and the second L-shaped element (31b) (see figure 21), while the piston rod of the second actuator cylinder (61) causes a rotation of the first L-shaped element (31a) (see figure 21).

The second cutting means (15) are preferably arranged at or in proximity of the second end (42) of the channel (4) (see figure 21).

The second guide (14) is preferably interposed between the second motor means (13) and the second cutting means (15) (see figure 21). Further, the inserting system (1) of at least one electrical cable (2) internally of a protective tube (3) can comprise a fifth guide (32) which is interposed between the second cutting means (15) and the second end (42) of the channel (4) to guide the at least one electrical cable (2) internally of the protective tube (3) (see figure 21). The second cutting means (15) can cut the at least one electrical cable (2) if, after introducing the at least one electrical cable (2) internally of the channel (4), the at least one electrical cable (2) protrudes from the fourth end (34) of the protective tube (3) by greater than the second length.

The first cutting means (12) can coincide with the second cutting means (15), in the sense that the first cutting means (12) can be arranged and configured to cut both the protective tube (3) and the at least one electrical cable (2).

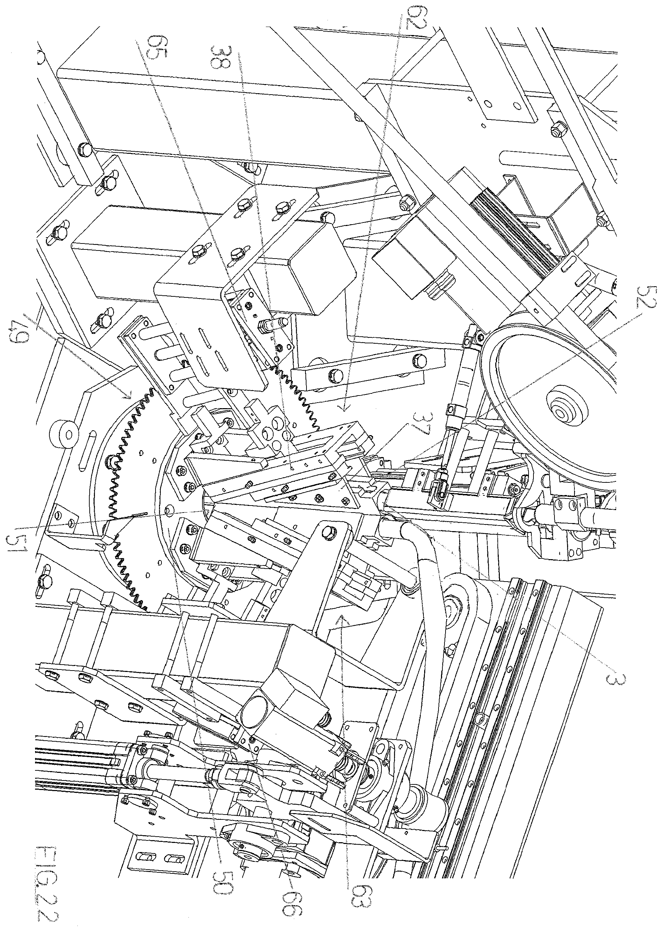

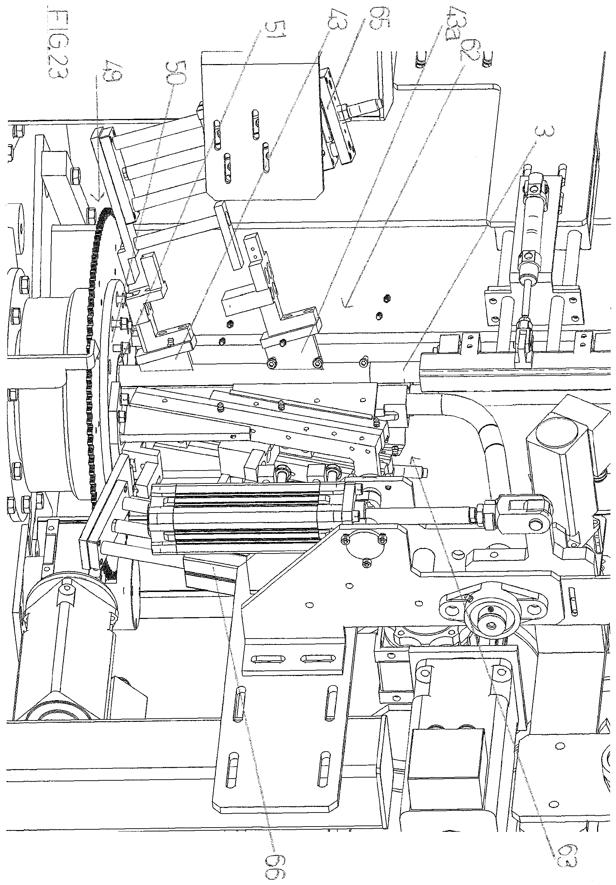

With particular reference to figures 22 and 23, the blocking means (19) comprise: a rotary carousel (49) which is arranged above the second end (42) of the channel (4) and which is provided with a rotating base (50) provided, in turn, with a through-hole (51) that is concentric to the channel (4) and dimensioned so as to enable passage of the protective tube (3); a first blocking unit (62), a second blocking unit (63) and a third blocking unit (only the first blocking unit (62) and the second blocking unit (63) are visible in figures 22 and 23) which are borne by the rotating base (50) and which are angularly equi-distanced with respect to one another by a 120° angle so as to be above the through-hole (51); and a third actuator cylinder (65), a fourth actuator cylinder (66) and a fifth actuator cylinder (only the third actuator cylinder (65) and the fourth actuator cylinder (66) are visible in figures 22 and 23) which are solidly constrained to the frame and arranged externally of the rotating base (50), also being angularly equi-distanced with respect to one another by a 120° angle; the first blocking unit (62), the second blocking unit (63), the third blocking unit, the third actuator cylinder (65), the fourth actuator cylinder (66) and the fifth actuator cylinder being configured so that the third actuator cylinder (65), the fourth actuator cylinder (66) and the fifth actuator cylinder respectively actuate the first blocking unit (62), the second blocking unit (63) and the third blocking unit so as to block the portion of the protective tube (3) which protrudes from the second end (42) of the channel (4) when the protective tube (3) is arranged in the first volume (20) of the channel (4) and/or in the second volume (21) of the channel (4) and/or in the third volume (22) of the channel (4).

The first blocking unit (62), the second blocking unit (63) and the third blocking unit can be substantially identical to one another.

The third actuator cylinder (65), the fourth actuator cylinder (66) and the fifth actuator cylinder can be substantially identical to one another.

Each blocking unit (62, 63) comprises: a sixth guide (37) which is tubular, which communicates with the through-hole (51) on which the first blocking unit (62) is positioned, for example, which is dimensioned to enable passage internally thereof of the protective tube (3) and along which a longitudinal slit (52) is made; a seventh guide (38) which is inclined by an acute angle (for example about 30 degrees) with respect to the sixth guide (37); a pair of elements (43, 43a) with wedge-shaped ends which are slidable along the seventh guide (38). With reference to figure 22, the first blocking unit (62), the second blocking unit (63) and the third blocking unit, is configured so that when the pair of elements (43, 43a) with wedge-shaped ends is raised, the pair of elements does not interfere with the protective tube (3) if present passing internally of the sixth guide (37) and that when the pair of elements (43, 43a) with the wedge-shaped ends is lowered, it penetrates the slit (52) of the sixth guide (37), interfering with the protective tube (3) if present passing through the sixth guide (37), up to blocking it.

The positions of the third actuator cylinder (65), the fourth actuator cylinder (66) and the fifth actuator cylinder, on one side, and the positions of the first blocking unit (62), the second blocking unit (63) and the third blocking unit at each pitch, on the other side, are such that each of the third actuator cylinder (65), the fourth actuator cylinder (66) and the fifth actuator cylinder can move the pair of elements (43, 43a) with wedge-shaped ends (raising them or allowing them to fall by force of gravity) of a blocking unit (62, 63).

Each element of the pair of elements (43, 43a) with wedge-shaped ends is activatable by a same piston rod of one of the actuator cylinders (65, 66). Each pair of elements (43, 43a) with the wedge-shaped ends has an element (43) with a wedge-shaped end located superiorly with respect to the other (43a). The presence of the pair of elements (43, 43a) with the wedge-shaped ends has the function of increasing the blocking force.

In figure 22 the sixth guide (37) and the seventh guide (38) with the relative third actuator cylinder (65) are visible. Instead the sixth guide (37) and the seventh guide (38) are omitted from figure 23 to better evidence the pair of elements (43, 43a) with wedge-shaped ends, which have performed the sliding by force of gravity along the sixth guide (37) and are abutting the protective tube (3) to block it in position. The rotating base (50) is moved by a pitch and each pitch is 120° and is arranged and configured in such a way as to bring each blocking unit (62, 63) to the first volume (20) of the channel (4), of the second volume (21) of the channel (4) and of the third volume (22) of the channel (4).

The inserting system (1) of at least one electrical cable (2) internally of a protective tube (3) further comprises a horizontal guide (36) and a carriage (47) that bears the gripping means (23) and that slides along the horizontal guide (36). Further, the inserting system (1) comprises a bearing frame (48) which supports the gripping means (23) which is activatable in rotation with respect to a vertical axis (Y) when it is in proximity of the protective tube (3) with, internally thereof, at least one electrical cable (2), so that the gripping means (23) can take the protective tube (3) with, internally thereof, the at least one electrical cable (2) from the third volume (22) of the channel (4) (see figures 17 and 18).

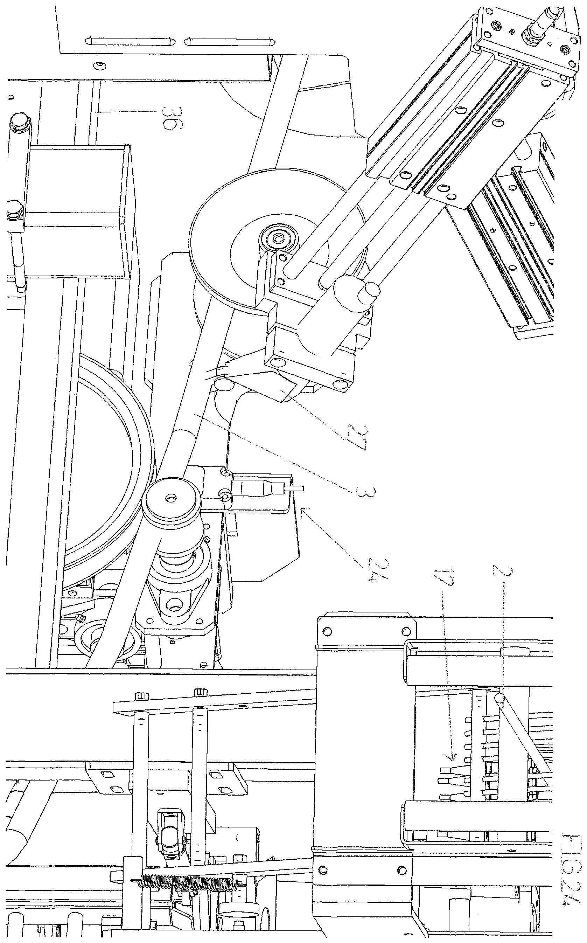

Further, the inserting system (1) of at least one electrical cable (2) internally of a protective tube (3) can comprise third proximity sensors (24) which are arranged downstream of the channel (4) in order to detect the presence of the at least one electrical cable (2) in the protective tube (3) (see figure 24).

The third proximity sensors (24) can be, for example, capacitive proximity sensors.

Further, the inserting system (1) of at least one electrical cable (2) internally of a protective tube (3) can comprise third cutting means (27) which are arranged so as to cut the part of protective tube (3) which does not have, internally thereof, the at least one electrical cable (2) (see figure 24).

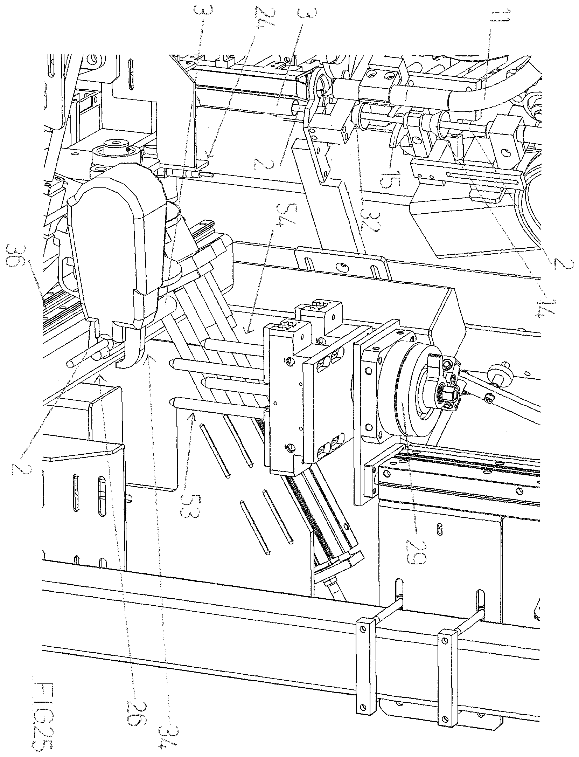

The anchoring means (28) can comprise: a rotatable element (29) which bears a pair of front prongs (53) and a pair of rear prongs (54); the pair of front prongs (53) and the pair of rear prongs (54) grip the sixth end (26) of the at least one electrical cable (2) which protrudes from the fourth end (34) of the protective tube (3). Subsequently, the rotatable element (29) is activated to rotate the pair of front prongs (53) and the pair of rear prongs (54) so that they assume a position in which they are arranged opposite with respect to the development axis of the horizontal guide (36). Further, the anchoring means (28) can comprise a stapler (30) for fixing the sixth end (26) of the at least one electrical cable (2) to the fourth end (34) of the protective tube (3) (see figure 25). Alternatively, the anchoring means (28) can comprise a crimper (not illustrated) for fixing the sixth end (26) of the at least one electrical cable (2) to the fourth end (34) of the protective tube (3).

There follows a description of the possible operation of the inserting system (1) of at least one electrical cable (2) internally of a protective tube (3).

The protective tube (3) can be wound on a first reel support (55) (illustrated generically only in figures 5, 11): therefore the protective tube (3) must initially be unwound, for example manually, in order to be taken by the first motor means (10), in order to pass through the first guide (11) and the fourth guide (31) and the first through-hole (50) of the rotary carousel (49) and to enter the first volume (20) of the channel (4).

The at least one electrical cable (2) can be wound on a second reel support (56) (illustrated generically only in figures 5, 11): therefore the at least one electrical cable (2) must be initially unwound, for example manually, in order to be taken by the second motor means (13) and to pass through the second guide (14) and the fifth guide (32).

The first motor means (10) are activated to introduce and insert the protective tube (3) internally of the first through-hole (50) and, therefore, of the first volume (20) of the channel (4) by the second end (42) of the channel (4) (see figures 6 and 12). Subsequently the blocking means (19) are activated to block the portion of the protective tube (3) which protrudes from the second end (42) of the channel (4). The piston of the third actuator cylinder (65) moves the relative piston rod, which lowers. As a consequence, the pair of elements (43, 43a) with wedge-shaped ends lowers by effect of the force of gravity, by sliding along the sixth guide (37). In this way, the pair of elements (43, 43a) with wedge-shaped ends abuts and blocks the protective tube (3) in position inside the first volume (20) of the channel (4).

Once the protective tube (3) is blocked, the first cutting means (12) are activated to cut the protective tube (3) in proximity of the second end (42) of the channel (4) so that it protrudes from the second end (42) of the channel (4) by a length that is shorter than the first length.

At this point, the first actuator cylinder (60) and the second actuator cylinder (61) are activated to distance the first L-shaped element (31a) from the second L-shaped element (31b) of the fourth guide (31) so as to leave free the portion of the protective tube (3) which protrudes from the second end of the channel (4). In this situation, it is possible to activate the rotating base (50) so as to bring the protective tube (3) from the first volume (20) of the channel (4) to the second volume (21) of the channel (4).

Thereafter, when the protective tube (3) is in the second volume (21) of the channel (4), the second motor means (13) are activated to introduce the electrical cable (2) in the second guide (14) and in the fifth guide (32) so that it can be inserted in the protective tube (3) (see figures 7-8 and 13-14).

Once the at least one electrical cable (2) is inserted in the protective tube (3), the second cutting means (15) are activated to cut the protective tube (2) in proximity of the fourth end (34) of the protective tube (3) so that it protrudes from the fourth end (34) of the protective tube (3) by a length that is shorter than the first length.

At this point, the rotating base (50) is newly activated in rotation so as to bring the protective tube (3) from the second volume (21) of the channel (4) to the third volume (22) of the channel (4) (see figures 15-16).

Once the protective tube (3) with the electrical cable (2) inside is in the third volume (22) of the channel (4), it can be gripped by the gripping means (23) in order to be brought to the anchoring means (28) and lastly to the infeed of a winding device (46). The gripping means (23) are, therefore, borne by the carriage (47) along the horizontal guide (36) in proximity of the rotary carousel (49). Having reached this position, the bearing frame (48) is activated in rotation, with respect to the vertical axis (Y), so as to be able to enable the gripping means (23) to grip the protective tube (3) with the electrical cable (2) inside.

The inserting system (1) is configured so that, during this last operation, the gripping means (23), while carrying the protective tube (3) with the electrical cable (2) to the infeed of the winding device (46), take the protective tube (3) also in proximity of the third proximity sensors (24). Should the third proximity sensors (24) not detect the presence of the electrical cable (2) at the third end (33) of the protective tube (3), the third cutting means (27) are activated to cut the part of the protective tube (3) which does not have the electrical cable (2) inside it.

Lastly, the anchoring means (28) intervene: the pair of front prongs (53) and the pair of rear prongs (54) grip the sixth end (26) of the electrical cable (2) protruding from the fourth end (34) of the protective tube (3) at two distinct points. The rotatable element (29) rotates the pair of front prongs (53) and the pair of rear prongs (54) so as to flank a part of the sixth end (26) of the electrical cable (2) to another, so that they can be anchored by means of the stapler (30) to the fourth end (34) of the protective tube (3). Lastly, the gripping means (23) take the protective tube (3) with the electrical cable (2) inside to the infeed of the winding device (46).

Should there already be a second protective tube (304) in the through-hole (51) and therefore in the second volume (21) of the channel (4), already cut by the cutting means (12) and blocked in position by a second pair of elements with wedge-shaped ends, they can be activated at the same time as the first motor means (10) in order to insert a first protective tube (303) in the first guide (11), in the fourth guide (31), in the first through-hole (50) and then in the first volume (20) of the channel (4) and the second motor means (13), to insert the electrical cable (2) in the second protective tube (304), already present in the second volume (21) of the channel (4) (see figures 11-16).

In this situation, the rotating base (50) is activated in rotation only after the pair of elements (43, 43a) with wedge-shaped ends of the first blocking unit (62) blocks the first protective tube (303) and another pair of elements with wedge-shaped ends of the second blocking unit (63) blocks the second protective tube (304) with the electrical cable (2) inside it.

At this point, the first cutting means (12) for cutting the first protective tube (303) in proximity of or at the second end (42) of the channel (4) are activated and the first actuator cylinder (60) and the second actuator cylinder (61) are activated to distance the first L-shaped element (31a) and the second L-shaped element (31b) of the fourth guide (31) so as to leave free the portion of the first protective tube (3) which protrudes from the second end of the channel (4). At the same time, the second cutting means (15) for cutting the electrical cable (2) in proximity of the fourth end (34) of the second protective tube (304) are activated.

In this situation, it is possible to activate the rotating base (50) so as to bring the first protective tube (303) from the first volume (20) of the channel (4) to the second volume (21) of the channel (4) and the second protective tube (304) with the electrical cable (2) inside from the second volume (21) of the channel (4) to the third volume (22) of the channel (4).

With the operation as described above, subsequently there is a contemporary occurrence of the steps of inserting the protective tubes (3, 303, 304, 305) into the channel (4), of the electrical cables (2, 203, 203, 204, 205) into the relative protective tube (3, 303, 304, 305), and of gripping the protective tube (3, 303, 304, 305) with the electrical cable (2, 203, 203, 204, 205) inside it (see figures 11-16).

## Claims

1. A inserting system (1) of at least an electrical cable (2) internally of a protective tube (3), comprising:
a channel (4) arranged in such a way that a relative first end (41) thereof is at a lower height than a relative second end (42) thereof, which is opposite the first end (41);
first motor means (10) arranged and configured so as to introduce a protective tube (3) internally of the channel (4) from the second end (42) of the channel (4) and inserting the protective tube (3) internally of the channel (4) for at least a first portion (5) of the channel (4);
a first guide (11) which is interposed between the first motor means (10) and the second end (42) of the channel (4), for guiding the protective tube (3) internally of the channel (4);
the protective tube (3) comprising a third end (33) and being introduced and inserted internally of the channel (4) from the relative third end (33) thereof;
the arrangement of the channel (4) being chosen in such a way that once the protective tube (3) has been inserted for at least the first portion (5) of the channel (4), the force of gravity acting on the protective tube (3) is sufficient in itself to insert the protective tube (3) internally of the channel (4);
first cutting means (12) which are arranged so as to cut the protective tube (3) in proximity of or at the second end (42) of channel (4);
the protective tube (3) comprising a fourth end (34) which is opposite the third end (33) and which is arranged at a greater height with respect to the third end (33);
second motor means (13) arranged and configured to introduce at least an electrical cable (2) internally of the protective tube (3) from the fourth end (34) of the protective tube (3) and for inserting the at least an electrical cable (2) internally of the protective tube (3) for at least a third portion (7) of the channel (4);
a second guide (14) which is interposed between the second motor means (13) and the second end (42) of the channel (4), for guiding the at least an electrical cable (2) internally of the protective tube (3);
the arrangement of the channel (4) and of the protective tube (3) internally of the channel (4) being chosen in such a way that once the at least an electrical cable (2) has been inserted for at least the third portion (7) of the protective tube (3) the force of gravity acting on the at least an electrical cable (2) is sufficient for inserting the at least an electrical cable (2) internally of the protective tube (3);
second cutting means (15) which are arranged so as to cut off the at least an electrical cable (2) in proximity of or at the fourth end (34) of the protective tube (3);
the at least an electrical cable (2) comprising a sixth end (26) which is opposite the fifth end (25) and which is arranged at a greater height than the fifth end (25).

2. The inserting system (1) of at least an electrical cable (2) internally of a protective tube (3) of the preceding claim, wherein: the protective tube (3) protrudes from the second end (42) of the channel (4); the inserting system (1) comprises blocking means (19) which are arranged so as to block the portion of the protective tube (3) which protrudes from the second end (42) of the channel (4).

3. The inserting system (1) of at least an electrical cable (2) internally of a protective tube (3) of the preceding claim, wherein:
the channel (4) comprises a first volume (20) which extends along the length of the channel (4) and a second volume (21), adjacent to the first volume (20), which also extends along the length of the channel (4);
the first motor means (10) and the first guide (11) are arranged in such a way that the protective tube (3) is inserted internally of the first volume (20) of the channel (4);
the second motor means (13) and the second guide (14) are arranged in such a way that the at least an electrical cable (2) is inserted internally of the protective tube (3) when the protective tube (3) is arranged internally of the second volume (21) of the channel (4);
the blocking means (19) are mobile in order to move the protective tube (3) from the first volume (20) of the channel (4) to the second volume (21) of the channel (4).

4. The inserting system (1) of at least an electrical cable (2) internally of a protective tube (3) of the preceding claim, wherein:
the channel (4) further comprises a third volume (22) which extends along the length of the channel (4) and which is adjacent to the second volume (21) of the channel (4);
the blocking means (19) are mobile so as to move the protective tube (3) with the at least an electrical cable (2) internal thereof from the second volume (21) of the channel (4) to the third volume (22) of the channel (4).

5. The inserting system (1) of at least an electrical cable (2) internally of a protective tube (3) of the preceding claim, wherein: it comprises a winding device (46) for winding the protective tube (3) with the at least an electrical cable (2) internally thereof in a reel; it comprises gripping means (23) which are arranged so as to grip the protective tube (3) with the at least an electrical cable internally thereof from the third volume (22) of the channel (4) and to take the protective tube (3) with the at least an electrical cable (2) internally thereof to the input of the winding device (46).

6. The inserting system (1) of at least an electrical cable (2) internally of a protective tube (3) of claim 1 or 2, wherein the at least an electrical cable (2) protrudes from the fourth end (34) of the protective tube (3); the inserting system (1) comprises anchoring means (28) for anchoring the portion of the at least an electrical cable (2) which protrudes from the fourth end (34) of the protective tube (3) to the portion of the protective tube (3) which protrudes from the second end (42) of the channel (4).

7. The inserting system (1) of at least an electrical cable (2) internally of a protective tube (3) of claim 3, wherein the blocking means (19) comprise: a rotary carousel (49) which is arranged above the second end (42) of the channel (4) and which is provided with a rotating base (50) provided, in turn, with a through-hole (51) that is concentric to the channel (4) and dimensioned so as to enable passage of the protective tube (3); a first blocking unit (62), a second blocking unit (63) and a third blocking unit which are borne by the rotating base (50) and which are angularly equi-distanced with respect to one another by a 120° angle so as to be above the through-hole (51); a third actuator cylinder (65), a fourth actuator cylinder (66) and a fifth actuator cylinder which are solidly constrained to the frame and arranged externally of the rotating base (50), also being angularly equi-distanced with respect to one another by a 120° angle, the first blocking unit (62), the second blocking unit (63), the third blocking unit, the third actuator cylinder (65), the fourth actuator cylinder (66) and the fifth actuator cylinder being configured so that the third actuator cylinder (65), the fourth actuator cylinder (66) and the fifth actuator cylinder respectively actuate the first blocking unit (62), the second blocking unit (63) and the third blocking unit so as to block the portion of the protective tube (3) which protrudes from the second end (42) of the channel (4) when the protective tube (3) is arranged in the first volume (20) of the channel (4) and/or in the second volume (21) of the channel (4) and/or in the third volume (22) of the channel (4).

## Patentansprüche

1. Einführsystem (1) zum Einführen von mindestens einem elektrischen Kabel (2) in ein Schutzrohr (3), umfassend:
einen Kanal (4), der so angeordnet ist, dass sich ein entsprechendes erstes Ende (41) davon auf einer niedrigeren Höhe befindet als ein entsprechendes zweites Ende (42) davon, das dem ersten Ende (41) gegenüberliegt;
erste Antriebsmittel (10), die angeordnet und konfiguriert sind, um ein Schutzrohr (3) in das Innere des Kanals (4) von dem zweiten Ende (42) des Kanals (4) her einzuführen und das Schutzrohr (3) für zumindest einen ersten Abschnitt (5) des Kanals (4) in das Innere des Kanals (4) einzuschieben;
eine erste Führung (11), die zwischen den ersten Antriebsmitteln (10) und dem zweiten Ende (42) des Kanals (4) angeordnet ist und zum Führen des Schutzrohrs (3) im Inneren des Kanals (4) dient;
wobei das Schutzrohr (3) ein drittes Ende (33) umfasst und von seinem entsprechenden dritten Ende (33) her in das Innere des Kanals (4) eingeführt und eingeschoben wird;
wobei die Anordnung des Kanals (4) derart gewählt wird, dass, sobald das Schutzrohr (3) für zumindest den ersten Abschnitt (5) des Kanals (4) eingeführt ist, die auf das Schutzrohr (3) wirkende Schwerkraft schon für sich alleine ausreichend ist, um das Schutzrohr (3) in das Innere des Kanals (4) einzuführen;
erste Schneidmittel (12), die angeordnet sind, um das Schutzrohr (3) in der Nähe von oder an dem zweiten Ende (42) des Kanals (4) abzuschneiden;
wobei das Schutzrohr (3) ein viertes Ende (34) umfasst, das dem dritten Ende (33) gegenüberliegt und das in einer größeren Höhe angeordnet ist als das dritte Ende (33);
zweite Antriebsmittel (13), die angeordnet und konfiguriert sind, um zumindest ein elektrisches Kabel (2) in das Innere des Schutzrohrs (3) von dem vierten Ende (34) des Schutzrohrs (3) her einzuführen und das zumindest eine elektrische Kabel (2) in das Innere des Schutzrohrs (3) für zumindest einen dritten Abschnitt (7) des Kanals (4) einzuschieben;
eine zweite Führung (14) die zwischen den zweiten Antriebsmitteln (13) und dem zweiten Ende (42) des Kanals (4) angeordnet ist und zum Führen des zumindest einen elektrischen Kabels (2) im Inneren des Schutzrohrs (3) dient;
wobei die Anordnung des Kanals (4) und des Schutzrohrs (3) im Inneren des Kanals (4) derart gewählt wird, dass, sobald das zumindest eine elektrische Kabel (2) für zumindest den dritten Abschnitt (7) des Schutzrohrs (3) eingeführt ist, die auf das zumindest eine elektrische Kabel (2) wirkende Schwerkraft ausreichend ist, um das zumindest eine elektrische Kabel (2) in das Innere des Schutzrohrs (3) einzuführen;
zweite Schneidmittel (15), die angeordnet sind, um das zumindest eine elektrische Kabel (2) in der Nähe von oder an dem vierten Ende (34) des Schutzrohrs (3) abzuschneiden;
wobei das zumindest eine elektrische Kabel (2) ein sechstes Ende (26) umfasst, das einem fünften Ende (25) gegenüberliegt und das in einer größeren Höhe angeordnet ist als das fünfte Ende (25).

2. Einführsystem (1) zum Einführen von mindestens einem elektrischen Kabel (2) in ein Schutzrohr (3) nach dem vorhergehenden Anspruch, wobei: das Schutzrohr (3) von dem zweiten Ende (42) des Kanals (4) hervorsteht; das Einführsystem (1) Einspannmittel (19) umfasst, die angeordnet sind, um den Abschnitt des Schutzrohrs (3) einzuspannen, der von dem zweiten Ende (42) des Kanals (4) hervorsteht.

3. Einführsystem (1) zum Einführen von mindestens einem elektrischen Kabel (2) in ein Schutzrohr (3) nach dem vorhergehenden Anspruch, wobei:
der Kanal (4) ein erstes Volumen (20) umfasst, das sich entlang der Länge des Kanals (4) erstreckt, und ein zweites Volumen (21), das an das erste Volumen (20) angrenzt und sich ebenfalls entlang der Länge des Kanals (4) erstreckt;
die ersten Antriebsmittel (10) und die erste Führung (11) so angeordnet sind, dass das Schutzrohr (3) in das Innere des ersten Volumens (20) des Kanals (4) eingeführt wird;
die zweiten Antriebsmittel (13) und die zweite Führung (14) so angeordnet sind, dass das zumindest eine elektrische Kabel (2) in das Innere des Schutzrohrs (3) eingeführt wird, wenn das Schutzrohr (3) im Inneren des zweiten Volumens (21) des Kanals (4) angeordnet ist;
die Einspannmittel (19) beweglich sind, um das Schutzrohr (3) von dem ersten Volumen (20) des Kanals (4) zu dem zweiten Volumen (21) des Kanals (4) zu bewegen.

4. Einführsystem (1) zum Einführen von mindestens einem elektrischen Kabel (2) in ein Schutzrohr (3) nach dem vorhergehenden Anspruch, wobei:
der Kanal (4) ferner ein drittes Volumen (22) umfasst, das sich entlang der Länge des Kanals (4) erstreckt und das an das zweite Volumen (21) des Kanals (4) angrenzt;
die Einspannmittel (19) beweglich sind, um das Schutzrohr (3) mit dem darin enthaltenen zumindest einen elektrischen Kabel (2) von dem zweiten Volumen (21) des Kanals (4) zu dem dritten Volumen (22) des Kanals (4) zu bewegen.

5. Einführsystem (1) zum Einführen von mindestens einem elektrischen Kabel (2) in ein Schutzrohr (3) nach dem vorhergehenden Anspruch, wobei: es eine Wickelvorrichtung (46) umfasst, um das Schutzrohr (3) mit dem darin enthaltenen zumindest einen elektrischen Kabel (2) zu einer Rolle aufzuwickeln; es Greifermittel (23) umfasst, die angeordnet sind, um das Schutzrohr (3) mit dem darin enthaltenen zumindest einen elektrischen Kabel (2) von dem dritten Volumen (22) des Kanals (4) zu ergreifen und das Schutzrohr (3) mit dem darin enthaltenen zumindest einen elektrischen Kabel (2) zum Einlass der Wickelvorrichtung (46) zu bringen.

6. Einführsystem (1) zum Einführen von mindestens einem elektrischen Kabel (2) in ein Schutzrohr (3) nach Anspruch 1 oder 2, wobei: das zumindest eine elektrische Kabel (2) von dem vierten Ende (34) des Schutzrohrs (3) hervorsteht; das Einführsystem (1) Verankerungsmittel (28) umfasst, um den Abschnitt des zumindest einen elektrischen Kabels (2), der vom vierten Ende (34) des Schutzrohrs (3) hervorsteht, an dem Abschnitt des Schutzrohrs (3) zu verankern, der von dem zweiten Ende (42) des Kanals (4) hervorsteht.

7. Einführsystem (1) zum Einführen von mindestens einem elektrischen Kabel (2) in ein Schutzrohr (3) nach Anspruch 3, wobei die Einspannmittel (19) umfassen: ein drehbares Karussell (49), das über dem zweiten Ende (42) des Kanals (4) angeordnet ist und das mit einer drehbaren Basis (50) ausgestattet ist, die ihrerseits mit einem Durchgangsloch (51) versehen ist, das konzentrisch zu dem Kanal (4) und derart bemessen ist, dass es den Durchgang des Schutzrohrs (3) ermöglicht; eine erste Spanneinheit (62), eine zweite Spanneinheit (63) und eine dritte Spanneinheit, die von der drehbaren Basis (50) getragen werden und in gleichen Winkelabständen von jeweils 120° voneinander angeordnet sind, so dass sie sich über dem Durchgangsloch (51) befinden; einen dritten Stellzylinder (65), einen vierten Stellzylinder (66) und einen fünften Stellzylinder, die an dem Rahmen festgelegt und außerhalb der drehbaren Basis (50) und ebenfalls in gleichen Winkelabständen von jeweils 120° voneinander angeordnet sind, wobei die erste Spanneinheit (62), die zweite Spanneinheit (63), die dritte Spanneinheit, der dritte Stellzylinder (65), der vierte Stellzylinder (66) und der fünfte Stellzylinder derart konfiguriert sind, dass der dritte Stellzylinder (65), der vierte Stellzylinder (66) und der fünfte Stellzylinder jeweils die erste Spanneinheit (62), die zweite Spanneinheit (63) und die dritte Spanneinheit betätigen, um den Abschnitt des Schutzrohrs (3) einzuspannen, der von dem zweiten Ende (42) des Kanals (4) hervorsteht, wenn das Schutzrohr (3) in dem ersten Volumen (20) des Kanals (4) und/oder in dem zweiten Volumen (21) des Kanals (4) und/oder in dem dritten Volumen (22) des Kanals (4) angeordnet ist.

## Revendications

1. Un système d'insertion (1) d'au moins un câble électrique (2) à l'intérieur d'un tube de protection (3), comprenant :
un canal (4) disposé de manière à ce qu'une première extrémité (41) correspondante de celui-ci soit à une hauteur plus basse qu'une deuxième extrémité (42) correspondante de celui-ci, qui est opposée à la première extrémité (41) ;
des premiers moyens moteurs (10) disposés et configurés pour introduire un tube de protection (3) à l'intérieur du canal (4) à partir de la deuxième extrémité (42) du canal (4) et pour insérer le tube de protection (3) à l'intérieur du canal (4) sur au moins une première portion (5) du canal (4) ;
un premier guide (11) qui est interposé entre les premiers moyens moteurs (10) et la deuxième extrémité (42) du canal (4), pour guider le tube de protection (3) à l'intérieur du canal (4) ;
le tube de protection (3) comprenant une troisième extrémité (33) et étant introduit et inséré à l'intérieur du canal (4) à partir de la troisième extrémité (33) correspondante ;
la disposition du canal (4) étant choisie de manière à ce que, une fois que le tube de protection (3) a été inséré sur au moins la première portion (5) du canal (4), la force de gravité agissant sur le tube de protection (3) est suffisante en soi pour insérer le tube de protection (3) à l'intérieur du canal (4) ;
des premiers moyens de coupe (12) qui sont disposés de manière à couper le tube de protection (3) à proximité de ou au niveau de la deuxième extrémité (42) du canal (4) ;
le tube de protection (3) comprenant une quatrième extrémité (34) qui est opposée à la troisième extrémité (33) et qui est disposée à une hauteur supérieure par rapport à la troisième extrémité (33) ;
des deuxièmes moyens moteurs (13) disposés et configurés pour introduire au moins un câble électrique (2) à l'intérieur du tube de protection (3) à partir de la quatrième extrémité (34) du tube de protection (3) et pour insérer ledit au moins un câble électrique (2) à l'intérieur du tube de protection (3) sur au moins une troisième portion (7) du canal (4);
un deuxième guide (14) qui est interposé entre les deuxièmes moyens moteurs (13) et la deuxième extrémité (42) du canal (4), pour guider ledit au moins un câble électrique (2) à l'intérieur du tube de protection (3) ;
la disposition du canal (4) et du tube de protection (3) à l'intérieur du canal (4) étant choisie de manière à ce que, une fois que ledit au moins un câble électrique (2) a été inséré sur au moins la troisième portion (7) du tube de protection (3), la force de gravité agissant sur ledit au moins un câble électrique (2) est suffisante pour insérer ledit au moins un câble électrique (2) à l'intérieur du tube de protection (3) ;
des deuxièmes moyens de coupe (15) qui sont disposés de manière à couper ledit au moins un câble électrique (2) à proximité de ou au niveau de la quatrième extrémité (34) du tube de protection (3) ;
ledit au moins un câble électrique (2) comprenant une sixième extrémité (26) qui est opposée à une cinquième extrémité (25) et qui est disposée à une hauteur supérieure par rapport à la cinquième extrémité (25).

2. Le système d'insertion (1) d'au moins un câble électrique (2) à l'intérieur d'un tube de protection (3) selon la revendication précédente, dans lequel : le tube de protection (3) dépasse de la deuxième extrémité (42) du canal (4) ; le système d'insertion (1) comprend des moyens de blocage (19) qui sont disposés de manière à bloquer la portion du tube de protection (3) qui dépasse de la deuxième extrémité (42) du canal (4).

3. Le système d'insertion (1) d'au moins un câble électrique (2) à l'intérieur d'un tube de protection (3) selon la revendication précédente, dans lequel :
le canal (4) comprend un premier volume (20) qui s'étend le long de la longueur du canal (4) et un deuxième volume (21), adjacent au premier volume (20), qui s'étend également le long de la longueur du canal (4) ;
les premiers moyens moteurs (10) et le premier guide (11) sont disposés de manière à ce que le tube de protection (3) soit inséré à l'intérieur du premier volume (20) du canal (4) ;
les deuxièmes moyens moteurs (13) et le deuxième guide (14) sont disposés de manière à ce que ledit au moins un câble électrique (2) soit inséré à l'intérieur du tube de protection (3) lorsque le tube de protection (3) est disposé à l'intérieur du deuxième volume (21) du canal (4) ;
les moyens de blocage (19) sont mobiles de manière à déplacer le tube de protection (3) du premier volume (20) du canal (4) au deuxième volume (21) du canal (4).

4. Le système d'insertion (1) d'au moins un câble électrique (2) à l'intérieur d'un tube de protection (3) selon la revendication précédente, dans lequel :
le canal (4) comprend en outre un troisième volume (22) qui s'étend le long de la longueur du canal (4) et qui est adjacent au deuxième volume (21) du canal (4) ;
les moyens de blocage (19) sont mobiles de manière à déplacer le tube de protection (3) avec ledit au moins un câble électrique (2) à l'intérieur de celui-ci du deuxième volume (21) du canal (4) au troisième volume (22) du canal (4).

5. Le système d'insertion (1) d'au moins un câble électrique (2) à l'intérieur d'un tube de protection (3) selon la revendication précédente, dans lequel : il comprend un dispositif d'enroulement (46) pour enrouler le tube de protection (3) avec ledit au moins un câble électrique (2) à l'intérieur de celui-ci en une bobine ; il comprend des moyens de préhension (23) qui sont disposés de manière à saisir le tube de protection (3) avec ledit au moins un câble électrique (2) à l'intérieur de celui-ci du troisième volume (22) du canal (4) et à porter le tube de protection (3) avec ledit au moins un câble électrique (2) à l'intérieur de celui-ci à l'entrée du dispositif d'enroulement (46).

6. Le système d'insertion (1) d'au moins un câble électrique (2) à l'intérieur d'un tube de protection (3) selon la revendication 1 ou 2, dans lequel ledit au moins un câble électrique (2) dépasse de la quatrième extrémité (34) du tube de protection (3) ; le système d'insertion (1) comprend des moyens d'ancrage (28) pour ancrer la portion dudit au moins un câble électrique (2) qui dépasse de la quatrième extrémité (34) du tube de protection (3) à la portion du tube de protection (3) qui dépasse de la deuxième extrémité (42) du canal (4).

7. Le système d'insertion (1) d'au moins un câble électrique (2) à l'intérieur d'un tube de protection (3) selon la revendication 3, dans lequel les moyens de blocage (19) comprennent : un carrousel tournant (49) qui est disposé au-dessus de la deuxième extrémité (42) du canal (4) et qui est doté d'une base tournante (50) dotée, à son tour, d'un trou traversant (51) qui est concentrique au canal (4) et dimensionné de manière à permettre le passage du tube de protection (3) ; une première unité de blocage (62), une deuxième unité de blocage (63) et une troisième unité de blocage qui sont portées par la base tournante (50) et qui sont angulairement équidistantes entre elles d'un angle de 120° afin d'être au-dessus du trou traversant (51) ; un troisième vérin actionneur (65), un quatrième vérin actionneur (66) et un cinquième vérin actionneur qui sont solidement contraints au châssis et disposés extérieurement à la base tournante (50), étant également angulairement équidistants entre eux d'un angle de 120°, la première unité de blocage (62), la deuxième unité de blocage (63), la troisième unité de blocage, le troisième vérin actionneur (65), le quatrième vérin actionneur (66) et le cinquième vérin actionneur étant configurés de manière à ce que le troisième vérin actionneur (65), le quatrième vérin actionneur (66) et le cinquième vérin actionneur actionnent respectivement la première unité de blocage (62), la deuxième unité de blocage (63) et la troisième unité de blocage afin de bloquer la portion du tube de protection (3) qui dépasse de la deuxième extrémité (42) du canal (4) lorsque le tube de protection (3) est disposé dans le premier volume (20) du canal (4) et/ou dans le deuxième volume (21) du canal (4) et/ou dans le troisième volume (22) du canal (4).
